(19) Europäisches Patentamt
European Patent Office
Office européen des brevets

(11) **EP 3 809 105 B1**

(12) **EUROPEAN PATENT SPECIFICATION**

(45) Date of publication and mention
of the grant of the patent:
**14.06.2023 Bulletin 2023/24**

(21) Application number: **20201218.3**

(22) Date of filing: **12.10.2020**

(51) International Patent Classification (IPC):
**G01L 5/28** *(2006.01)*      **G01M 17/007** *(2006.01)*

(52) Cooperative Patent Classification (CPC):
**G01M 17/0074; G01L 5/282**

(54) **COMBINED TESTING EQUIPMENT FOR MOTOR VEHICLE TESTING STATIONS**

KOMBINIERTE PRÜFEINRICHTUNGEN FÜR KRAFTFAHRZEUGPRÜFSTATIONEN

ÉQUIPEMENTS D'ESSAI COMBINÉS POUR LES STATIONS D'ESSAI DE VÉHICULES À MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2019 CZ 20190063**

(43) Date of publication of application:
**21.04.2021 Bulletin 2021/16**

(73) Proprietor: **ATAL s.r.o.**
**39001 Tábor (CZ)**

(72) Inventors:
• **Horejsí, Josef**
**39161 Oparany (CZ)**
• **Kotaska, Milan**
**39133 Jistebnice (CZ)**
• **Freitag, Petr**
**39155 Chýnov (CZ)**

(74) Representative: **Sedlák, Jirí**
**Okruzni 2824**
**370 01 Ceské Budejovice (CZ)**

(56) References cited:
**EP-A2- 0 433 668     DE-A1- 3 701 254**
**GB-A- 2 284 271**

EP 3 809 105 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

The invention concerns combined testing equipment for motor vehicle testing stations that is intended for the measurement of exhaust fume emissions, vehicle braking force and brake performance within the framework of the periodic inspections of vehicles required by law.

Background of the Invention

Currently, vehicles are periodically inspected as per national legislation approving vehicles for operation on roads to ensure their safe operation on roads. The purpose of such technical inspections is to prevent the operation of vehicles that fail to meet the required technical requirements. Within the framework of the periodic inspection of vehicle, vehicle operating parameters, among which for example vehicle wheel braking force and vehicle internal combustion engine exhaust emissions are measured in the vehicle testing station. The key purpose in these cases is to ascertain the behaviour of the vehicle under real operating conditions, particularly in urban traffic.

The measurement of gaseous emissions in exhaust fumes produced by explosive combustion engines is usually performed in two specific steady speed points. They concern idle engine speed and so-called increased engine speed, usually within the range from 2,000 to 3,000 revolutions per minute. The depth and procedure of the test are specified exclusively by national legislation and therefore they differ for each country (in the EU as well). With compression ignition engines, a dynamic behaviour of smoke emissions during the idle acceleration of the compression ignition engine (i.e. after the acceleration pedal is fully stepped on) is measured when the engine accelerates from idle speed to maximum speed (given by the engine overspeed limiter) within a time slot of one to several seconds.

Measurements of emissions in these tests is based on measurements with idle engine. Engine load is minimal as it comprises only passive resistances of the engine, and in the case of compression ignition engines also inertia masses of the revolving engine.

The disadvantages of the aforementioned methods of emission inspections performed on motor vehicles rest in the fact that the measurements are carried out under conditions utterly different from the actual operation of the motor vehicle. From the point of view exhaust fume emissions, an idle engine behaves differently from a loaded one. Moreover, a considerable portion of compression ignition engines are fitted with a boosting system that does not make to manifest itself during the short test, which means that the engine is operated in a cycle that rarely occurs during its regular operation. The currently employed methods of the measurement of exhaust fume emissions provide results the values of which do not reflect at all emission behaviour of the engine in real conditions of urban traffic, which should be the key purpose of the technical inspection. Moreover, gaseous emissions produced by an idle engine include a minimal portion of nitrogen oxides emissions compared to a loaded engine.

Recent developments in internal combustion engines have been under the constant pressure to reduce $CO_2$ emissions. The only way with internal combustion engines is a reduction of the engine cylinder capacity along with an increase of the engine efficiency. Increase in the efficiency of engines results in particular in higher fuel injection pressures and in higher pressures and temperatures in the combustion chambers of the engines. In addition, there is a way to increase the compression ratio and the related adjustment of the time process of injection and ignition. However, this process results in a significant increase of the volume of pollutants - nitrogen oxides ($NO$, $NO_2$), and also in an increase of the volume of carcinogenic nanoparticles in exhaust fumes.

Currently, there is an ongoing process that should incorporate the measurements of these pollutants into the standard operations of the vehicle testing station. However, the currently employed methods of measurement on idle engines, the measurement of nitrogen oxides ($NO$, $NO_2$) can hardly be performed at all. An experimental project implemented in France has confirmed that it is possible to measure the required parameters with a loaded engine only, at best by a load test that will simulate selected segments of driving in urban traffic. A similar project implemented in Germany, The Netherlands, and Belgium resulted in the decision to start the preparation for incorporation of the measurement of particle number (PN) concentration into the standard operations performed by the vehicle testing stations. For the time being, it is assumed that the measurement will be performed at idle speed and the engine will need to be under operating conditions prior to the measurement. However, this is hardly feasible under the standard process employed by vehicle testing stations during obligatory inspections.

During periodic inspections, vehicle testing stations also measure the performance of brakes and the vehicle braking force. Measurements of braking force and brake performance of individual wheels of a vehicle are carried out on a roller-type braking test stand, always on one axle of the vehicle. Dimensions of the existing roller-type braking test stands (US 2006130567 A, WO 9732189 A) usually require construction work of the floor in the vehicle testing station, meaning building an opening in the floor into which the roller-type braking test stand is installed. It is also known a vehicle testing station according to DE 37 01 254 A1.

According this solution it is possible to measure the effectiveness of additional braking devices such as ABS and ASR. Alternatively, the roller-type braking test stand protrudes above the level of the terrain and access to it is via a long drive-up ramp. According to EP 0 433 668 A2, a combined testing station for measuring the power and brakes of vehicles is known. This station allows simultaneous measurement of power, braking force, ABV and ABS efficiency and emissions. Even at this station, it is not possible to measure emissions with a loaded engine.

According to GB 2 284 271 A, there is provided a method of inspecting a steering interrelated control function of a motor vehicle, which function operates to control a rotation of at least one wheel in response to a steering operation of the motor vehicle, with respect to control a limited slip of wheels for restricting the difference in rotational speed between the right and left wheels as the driving wheels is carried out. This station also does not allow to measure emissions with a loaded engine.

When the measurement of the entire vehicle is performed, a gradual driving up and measuring the wheels on the front axle and subsequently the wheels on the rear axle is required. The aforementioned method cannot be applied to 4WD (4-wheel drive) vehicles. If the method is used, there is a risk of destruction of the connection between the front and rear axles drives (or the inter-axle differential, where applicable), and/or there is a risk of impossibility to measure braking force on either axle as the four-wheel drive vehicle will drive up from the stand in an uncontrolled manner. The state of the art comprises alternative methods assuming the use of jacks for the axle that is not being measured, and/or the use of a supplementary installation of a roller path, gradually for both axles that are not being measured. Lifting of the axle that is not being measured is not used for safety reasons. The installation of the roller path must be performed twice for every vehicle (for the first time in front of the braking test stand when the brakes of the front axle wheels are measured and then behind the breaking test stand when the wheels of the rear axle are measured). In most cases, the aforementioned vehicles are eliminated from the standard inspection procedure and undergo only a short driving test, i.e. subjective inspection of the vehicle testing station operator. A specific procedure is imposed by the applicable national legislation binding on vehicle testing stations.

The disadvantage of the aforementioned measurement of braking force and brake performance is impossibility to effectively measure brake performance on four-wheel drive (4WD) vehicles. Dimensions of currently employed braking test stands require, in an absolute majority of cases, construction work or preparation represented by the construction of an opening in the floor of the vehicle testing station. The dedicated length of the space in the vehicle testing station dedicated for this purpose requires nearly double the length of that of the largest vehicle to be measured.

The known problem with giving a spin to all wheels of a four-wheel drive (4WD) vehicle has been resolved on a mechanical basis by the technical solution disclosed in the CZ 30316 U1 document, where generating rollers for all four wheels are used with the interconnection of the rollers for all four wheels being performed mechanically by shafts and transmissions. The disadvantages of the solution rest in the fact that the solution is not suitable for the simulation of the vehicle driving cycles in urban traffic, and moreover, it is not suitable for the measurement of braking force on individual vehicle axles.

The task of the invention is the creation of combined testing equipment for vehicle testing stations to perform the required periodic measurements, focused in particular on the measurement of emissions produced by loaded vehicles within the framework of simulated driving cycles, and also for the measurement of vehicle braking force and brake performance. The combined testing equipment could be available for not only new, but also the existing vehicle testing stations without the necessity of extensive construction work required for the installation of the combined testing equipment. In addition, the combined testing equipment could be used for vehicles with single-axle or double-axle drives.

Summary of the Invention

The set goal has been resolved by inventing the combined testing equipment for motor vehicle testing stations according to the present invention as defined in the appended claims.

The combined testing equipment for motor vehicle testing stations that is intended for the measurement of exhaust fume emissions, vehicle braking force and brake performance, comprises four pairs of generating rollers for the generating process required for the vehicle wheels during the tests. In addition, the combined testing equipment comprises at least one source of load for the dissipation of energy generated by vehicle wheels. Energy dissipation is performed during the exhaust fume emission measurement. The combined testing equipment also comprises at least one source of force for giving a spin to the vehicle wheels to measure the vehicle braking force and brake performance. Another part of the combined testing equipment is at least one counter of revolutions to measure the revolutions of the generating rollers.

The essence of the invention rests in the fact that the equipment consists of four modules for the vehicle wheel bearing and that the source for energy dissipation and the source of force in each module are provided by an electric motor. In addition, the module comprises a pair of generating rollers between which the vehicle wheel is positioned. The generating rollers are fitted with shafts in their axes. The shafts of the generating rollers are coupled with the electric motor shaft to transfer work onto the generating rollers, whereby the front generating roller and the rear generating roller are fitted with couplings for the power-controlled disconnection of the rollers from the electric motor. The shaft of the rear generating roller between the coupling and the electric motor is also fitted a transmission to change revolutions and force by which the electric motor acts on the rear roller.

The advantages of the equipment rest in the fact that each module is mechanically independent of the others. The use of a single electric motor in each module reduces the costs of the equipment manufacture as well as demands for space required by the combined testing equipment. The use of a single electric motor as the source for energy dissipation and also as the source of force is enabled by the new design of its connection to the generating rollers, specifically by the couplings and transmission. The couplings allow the generating roller neutral operation, generating roller drive, and in a preferred embodiment, also a lock of the roller upon the vehicle driving up and down the combined testing equipment. In addition, the transmission allows the force transmitted from the electric motor and required for giving a spin to the wheels with brakes engaged to be increased up to the necessary level without having to specifically adapt the electric motor for the measurement.

The invention significantly innovates the outdated and unsatisfactory measurement of gaseous emissions and particle emissions in exhaust fumes. In addition, the invention significantly extends the possibilities of the measurement of braking force and brake performance of each wheel of the motor vehicle (car), namely for 4WD vehicles as well. The aforementioned check measurement is performed during a single vehicle driving up onto the combined testing equipment and only in a single stand.

In a preferred embodiment of the combined testing equipment according to the present invention, the transmission ratio (P1) of the revolutions (n1) of the electric motor and the revolutions (n10) of the front roller with the coupling of the front roller engaged and the coupling of the rear roller disengaged at the same time, and the transmission ratio (P2) of the revolutions (n1) of the electric motor and the revolutions (n9) of the rear roller with the coupling of the rear roller engaged and the coupling of the front roller disengaged at the same time is P2 : P1, see the formula:

$$\frac{\frac{n1}{n9}}{\frac{n1}{n10}} = \frac{P2}{P1}$$

where this transmission ratio P2 : P1 falls within the range from 5 : 1 to 20 : 1.

The structural design of the combined testing equipment allows load applied to the vehicle engine to simulate real vehicle driving on road, this both with respect to the mechanical losses of the vehicle during driving, aerodynamics losses of the vehicle, the action of inertia masses upon changes of the vehicle speed, and also in respect of road slope. The structural design of the station allows such a simulation to be carried out within the range of the vehicle speed up to 60 km/h and with the vehicle load up to 25 kW.

In a preferred embodiment of the combined testing equipment according to the present invention, the electric motor refers to a synchronous electric motor with permanent magnets that is fitted with a power converter. The synchronous electric motor can also be used as a gauge to measure torque and in addition, this type of electric motor is well-operable by a controlled change of current and voltage that is provided via the power converter.

It is very good that the operation of individual electric motors on each wheel can be synchronized without the vehicle electronic control system activating vehicle safety assistants. The activation of the vehicle safety assistants results in the power control system intervention that issues a command to reduce the vehicle speed. This would eliminate the possibility to carry out the measurements under standard operating conditions.

In a preferred embodiment of the combined testing equipment according to the present invention, the counters of revolutions and the electric motor of each module are fitted with connectors for connection to the common control unit. Connection to the common control unit allows the combined testing equipment to be used for comfortable control of all electric motors and evaluate the measurement results.

In a preferred embodiment of the combined testing equipment according to the present invention the modules are integrated into a common load-bearing frame in an adjustable manner. The positions of the modules in the frame can be set according to the make and type of the vehicle to be measured.

In a preferred embodiment of the combined testing equipment according to the present invention the couplings are adjustable to lock the rotational movement of the generating rollers. Rotational movement locking allows the vehicle to drive up and down the generating rollers of the testing equipment easily.

Among the advantages of the invention is the structural design of the station allowing the conditions of driving on a road to be maintained. This means maintaining the same speed of the rotational movement of individual wheels under stable load for all configurations of the vehicle drive (which means: front-axle drive, rear-axle drive, double-axle drive along with a different proportion of drive acting on individual axles).

The design of the combined testing equipment allows, among others, the measurement of the vehicle braking force and brake performance in a manner that is the same as the currently employed measuring procedure, namely performed at first on the wheels of the front axle and then on the wheels of the rear axle at speeds not exceeding 5 km/h and braking forces up to 8 kN without having to change the position of the vehicle.

The design of the combined testing equipment also allows the function of the generating rollers on the axle that is not being measured to be changed in a flexible manner, thus allowing the standard measurement of braking force to be measured on 4WD vehicles as well. This is attained by releasing the generating rollers of the combined testing equipment on the axle not being measured with the wheels being able to rotate freely without any load applied to the inter-axle mechanisms. For 2WD vehicles, it is possible to lock the generating rollers of the axle that is not being measured. The measurement on the front and rear axles will be carried out in the same way without the vehicle having to change its position. The dimension of the space currently dedicated in the vehicle testing station for this operation requires nearly double the length of the longest vehicle. The testing equipment that is the subject of the present invention requires for the same function an insignificantly longer space than double the length of the longest vehicle.

The combined testing equipment for both measurements has been designed as low-profile, meaning that it can be installed directly on the floor of the vehicle testing station. The combined testing equipment does not require any other construction work and its installations is not time-consuming. The use of the combined testing equipment allows two key operations within the framework of the technical inspection to be measured on a single testing stand, which means that the requirements for the length of the entire vehicle testing station can be reduced by nearly one parking space. Reduction of time frames required for moving between individual operations reduces the time cycle of the measurements. The combined testing equipment can be installed for example on the existing stand for measuring emissions and the inspection of brakes can be carried out in the same place. Therefore, it can be assumed that the deployment of this combined testing equipment will not require any construction work to be performed in currently operated vehicle testing stations and that the functional range of testing operations employed by vehicle testing stations will be considerably extended as well.

## Explanation of Drawings

The present invention will be explained in detail by means of the following figures where:

Fig. 1      refers to a diagram of the modular system of the combined testing equipment according to the present invention,

Fig. 2      refers to the exploded view of the insular module of which the combined testing equipment is comprised.

## An Example of the Invention Embodiment

It shall be understood that the specific cases of the invention embodiments described and depicted below are provided for illustration only and do not limit the invention to the examples provided here. Persons skilled in the art will find or, based on routine experiments, will be able to provide a greater or lesser number of equivalents to the specific embodiments of the invention which are described here.

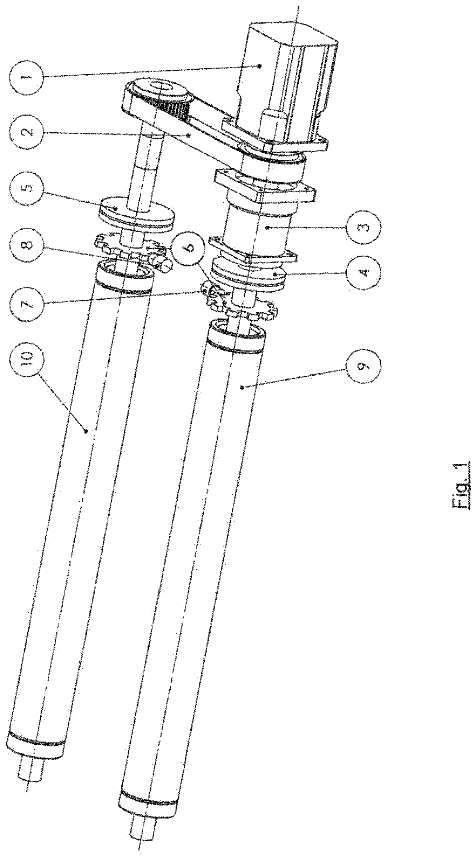

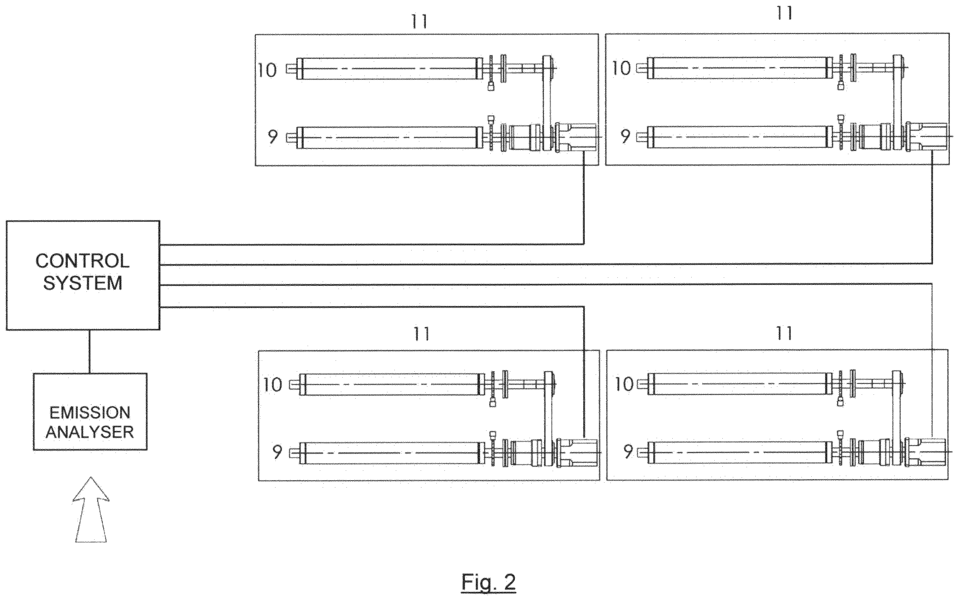

The combined testing equipment comprises four modules 11 connected to the control unit, as shown in Fig. 2. Fig. 1 shows one of the modules 11 in detail. The module 11 consists of two generating rollers 9 and 10, specifically of the front generating roller 10 and of the rear generating roller 9. The shafts of both generating rollers 9 and 10 are fitted with the wheel-speed sensors 7 and 8. In addition, the shafts of the generating rollers 9 and 10 are fitted the couplings 4 and 5, whereby the shaft of the front generating roller 10 is coupled with the electric motor 1 by the belt transmission 2, while the shaft of the rear generating roller 9 is connected to the electric motor 1 directly via the transmission 3.

The transmission 3 is set to the transmission ratio of 10 : 1, which is the easiest to operate, but also different transmission ratios can be considered provided that they are justifiable from the point of view of the measurement.

It is obvious from Figure 2 that the combined testing equipment is designed for vehicles with four wheels. In terms of communication, each module 11 is interconnected with the control unit that can also be connected to the gaseous emission analyser the detector of which is inserted into the exhaust of the vehicle, or to the vehicle that is not shown by the OBD connector or via a different type connector. The modules 11 are integrated in a fixed frame that is not shown in an adjustable manner and the frame is to be put on the floor of the vehicle testing station.

Emission measurement function

The emission measurement function simulates the vehicle load similarly as in the case of the vehicle driving on a road. The testing equipment allows testing in a dynamic cycle (acceleration, deceleration, change of gears) that is based on for example the WLTP testing method, or static measurement based on for example the ASM test. Testing is carried out at speeds not exceeding 60 km/h and with the maximum loaded vehicle output up to 25 kW.

During these tests, load is generated by the front roller 10 - the vehicle, by its driven wheels, will give a spin to the front generating rollers 10 and the rear generating rollers 9, whereby the front generating rollers 10 will then generate load applied to the vehicle (by braking). The rear generating roller 9 is used as the measurement one - its speed is measured by the sensor 7. The reason for the measurement is to ascertain a potential drive slip of the wheel tyre on the load front generating roller 10. To generate load, the electric motor 1 is used and connected by the belt transmission 2 in the 1 : 1 ratio, and, via the engaged coupling 5, the load is transmitted to the front generating roller 10. The coupling 4 of the rear roller **9** is disengaged. Nevertheless, its speed is measured by the speed sensor **7**.

Brake system testing function

The brake system testing function tests the brake system of the vehicle similarly as the brake system is tested in vehicle testing stations. The braking action on individual wheels is measured and the deviation of the braking action between the left and right wheels within the framework of the same axle is evaluated. Testing is carried out at speeds not exceeding 5 km/h and the maximum testing power is 8,000 N.

For these tests, the braking force is measured by the rear generating roller **9**. The combined testing equipment will give this generating roller **9** a spin and the vehicle then applies brake action on individual wheels. The front generating roller **10** is used as the measurement one - its speed is measured by the speed sensor **8**. The reason for the measurement is to ascertain a potential drive slip of the wheel tyre on the load rear generating roller **9**. To generate load, the electric motor **1** is used and connected by the transmission **3** with the transmission ratio 10 : 1, and, via the coupling **4,** the drive is transmitted to the rear generating roller **9**. The coupling **5** for the front generating roller **10** is disengaged.

Industrial Applicability

The combined testing equipment for motor vehicle testing stations intended for the measurement of exhaust fume emissions, vehicle braking force, and brake performance manufactured according to the present invention will find application in the automotive industry.

Overview of the Positions

1　　electric motor
2　　belt transmission
3　　vehicle transmission
4　　coupling of the rear generating roller
5　　coupling of the front generating roller
6　　gear wheels of the wheel-speed sensors 7 and 8
7　　counter of revolutions of the rear generating roller
8　　counter of revolutions of the front generating roller
9　　rear generating roller
10　　front generating roller
11　　insular module
12　　control unit

**Claims**

**1.** A combined testing equipment for motor vehicle testing stations designed for a measurement of exhaust fume emissions, vehicle braking force and brake performance, consisting of four pairs of generating rollers (9, 10) for the generating process required for the vehicle wheels, of at least one source of load to dissipate energy, of at least one source of force to give the vehicle wheels a spin, and of at least one counter of revolutions (7, 8) to measure the revolutions of the generating rollers (9, 10), **characterized in that** the equipment comprises four modules (11) to support the vehicle wheels and **in that** the source for work dissipation and the source of force are in each module (11) generated together by the electric motor (1), whereby each module (11) consists of a pair of the generating rollers (9, 10) that are fitted in their axes with shafts that are coupled with the shaft of the electric motor (1) to transmit work, and the shaft of the front generating roller (10) and the shaft of the rear generating roller (9) are each fitted with a coupling (4, 5) for power-controlled disconnecting of the rollers (9, 10) from the electric motor (1), and at the same time the shaft of the rear generating roller (9) between the coupling (4) and the electric motor (1) is equipped with a transmission (3).

**2.** The combined testing equipment according to claim 1, **characterized in that** the transmission ratio (P1) of the revolutions (n1) of the electric motor (1) and the revolutions (n10) of the front roller (10) with the coupling (5) of the front roller engaged and the coupling (4) of the rear roller disengaged, and the transmission ratio (P2) of the revolutions (n1) of the electric motor (1) and the revolutions (n9) of the rear roller (9) with the coupling (4) of the rear roller engaged and the coupling (5) of the front roller disengaged is in the proportion of (P2 : P1), specifically within the range from 5 : 1 to 20 : 1.

**3.** The combined testing equipment according to claim 1 or 2, **characterized in that** the electric motor (1) is a synchronous electric motor with permanent magnets that is fitted with a power converter.

**4.** The combined testing equipment according to some of claims 1 through 3, **characterized in that** the counters of revolutions (7, 8) and the electric motor (1) of each module (11) are fitted with connectors for connection to the common control unit.

**5.** The combined testing equipment according to some of claims 1 through 4, **characterized in that** the modules (11) are integrated into a common load-bearing frame in an adjustable manner.

**6.** The combined testing equipment according to some of claims 1 through 5, **characterized in that** the couplings (4, 5) are adjustable to lock the rotational movement of the generating rollers (9, 10).

**Patentansprüche**

1. Kombiniertes Prüfgerät für Kraftfahrzeug-Prüfstationen, die für eine Messung von Abgasemissionen, Fahrzeugbremskraft und Bremsleistung ausgelegt sind, bestehend aus vier Paaren von Scheitelrollen (9, 10) für den für die Fahrzeugräder erforderlichen Antriebsprozess, aus mindestens einer Lastquelle zum Abführen von Energie, aus mindestens einer Kraftquelle, um die Fahrzeugräder in Drehung zu versetzen, und aus mindestens einem Umdrehungszähler (7, 8) zum Messen der Umdrehungen der Scheitelrollen (9, 10), **dadurch gekennzeichnet, dass** die Ausrüstung vier Module (11) zum Tragen der Fahrzeugräder umfasst und dass die Quelle für die Arbeitsableitung und die Kraftquelle in jedem Modul (11) zusammen durch den Elektromotor (1) erzeugt werden, wobei jedes Modul (11) aus jeweils einem Paar der Scheitelrollen (9, 10) besteht, die in ihren Achsen mit Wellen versehen sind, die mit der Welle des Elektromotors (1) gekoppelt sind, um Arbeit zu übertragen, und die Welle der vorderen Scheitelrolle (10) und die Welle der hinteren Scheitelrolle (9) jeweils mit einer Kupplung (4, 5) zum kraftgesteuerten Trennen der Rollen (9, 10) vom Elektromotor (1) ausgestattet sind und gleichzeitig die Welle der hinteren Scheitelrolle (9) zwischen der Kupplung (4) und dem Elektromotor (1) mit einem Getriebe (3) ausgestattet ist.

2. Kombiniertes Prüfgerät nach Anspruch 1, **dadurch gekennzeichnet, dass** das Übersetzungsverhältnis (P1) der Umdrehungen (n1) des Elektromotors (1) und der Umdrehungen (n10) der vorderen Rolle (10) bei eingerückter Kupplung (5) der vorderen Rolle und ausgerückter Kupplung (4) der hinteren Rolle und das Übersetzungsverhältnis (P2) der Umdrehungen (n1) des Elektromotors (1) und der Umdrehungen (n9) der hinteren Rolle (9) bei eingerückter Kupplung (4) der hinteren Rolle und ausgerückter Kupplung (5) der vorderen Rolle im Verhältnis (P2 : P1), insbesondere im Bereich von 5 : 1 bis 20 : 1, liegt.

3. Kombiniertes Prüfgerät nach Anspruch 1 oder 2, **dadurch gekennzeichnet, dass** der Elektromotor (1) ein Synchron-Elektromotor mit Permanentmagneten ist, der mit einem Leistungswandler ausgestattet ist.

4. Kombiniertes Prüfgerät nach einem der Ansprüche 1 bis 3, **dadurch gekennzeichnet, dass** die Umdrehungszähler (7, 8) und der Elektromotor (1) jedes Moduls (11) mit Anschlüssen zur Verbindung mit der gemeinsamen Steuereinheit versehen sind.

5. Kombiniertes Prüfgerät nach einem der Ansprüche 1 bis 4, **dadurch gekennzeichnet, dass** die Module (11) in einem gemeinsamen Tragrahmen verstellbar integriert sind.

6. Kombiniertes Prüfgerät nach einem der Ansprüche 1 bis 5, **dadurch gekennzeichnet, dass** die Kupplungen (4, 5) zur Arretierung der Drehbewegung der Scheitelrollen (9, 10) verstellbar sind.

**Revendications**

1. Un équipement de test combiné pour des stations de test pour des véhicules à moteur, conçues pour une mesure des émissions de fumée du pot d'échappement, de la force de freinage du véhicule et de la performance du frein, consistant en quatre paires de rouleaux générateurs (9, 10) pour le processus de génération requis pour les roues du véhicule, d'au moins une source de chargement pour dissiper l'énergie, d'au moins une source de force pour faire tourner les roues du véhicule et au moins un compteur de révolutions (7, 8) pour mesurer les révolutions des rouleaux générateurs (9, 10) **caractérisé en ce que** l'équipement comprend quatre modules (11) pour supporter les roues du véhicule et **en ce que** la source pour la dissipation du travail et la source de la force sont dans chaque module (11) générés ensemble par le moteur électrique (1), où chaque module (11) consiste chacun d'une paire de rouleaux générateurs (9, 10) qui sont ajustés sur leurs axes avec des arbres qui sont couplés avec l'arbre du moteur électrique (1) pour transmettre le travail, et l'arbre du rouleau générateur de l'avant (10) et l'arbre du rouleau générateur de l'arrière (9) sont ajustés avec un couplage (4, 5) pour la déconnexion des rouleaux (9, 10) contrôlée par le courant du moteur électrique (1) et en même temps l'arbre du rouleau générateur (9) de l'arrière entre le couplage (4) et le moteur électrique (1) est équipé avec une transmission (3).

2. L'équipement de test combiné selon la revendication 1, **caractérisé en ce que** le rapport de transmission (P1) des révolutions (n1) du moteur électrique (1) et les révolutions (n10) du rouleau avant (10) avec le couplage (5) du rouleau avant engagé et le couplage (4) du rouleau arrière désengagé et le rapport de transmission (P2) des révolutions (n1) du moteur électrique (1) et les révolutions (n9) du rouleau arrière (9) avec le couplage (4) du rouleau arrière engagé et le couplage (5) du rouleau avant désengagé est dans la proportion de (P2 : P1), spécifiquement dans la gamme de 5 : 1 à 20 : 1.

3. L'équipement de test combiné selon la revendication 1 ou 2, **caractérisé en ce que** le moteur électrique (1) est un moteur électrique synchrone avec des aimants permanents, c'est-à-dire ajusté avec un convertisseur de puissance.

4. L'équipement de test combiné selon certaines des revendications 1 à 3, **caractérisé en ce que** les compteurs de révolutions (7, 8) et le moteur électrique (1) de chaque module (11) sont ajustés avec des connecteurs pour la connexion à l'unité de contrôle commune.

5. L'équipement de test combiné selon certaines des revendications 1 à 4, **caractérisé en ce que** les modules (11) sont intégrés dans un cadre commun de portance de manière ajustable.

6. L'équipement de test combiné selon certaines des revendications 1 à 5, **caractérisé en ce que** les couplages (4, 5) sont ajustables pour verrouiller le mouvement rotationnel des rouleaux générateurs (9, 10).

Fig. 1

Fig. 2

CONTROL SYSTEM

EMISSION ANALYSER

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006130567 A
- WO 9732189 A
- DE 3701254 A1
- EP 0433668 A2
- GB 2284271 A
- CZ 30316 U1